# EUROPEAN PATENT APPLICATION

(11) **EP 1 454 668 A1**
(43) Date of publication of application: **08.09.2004**
(21) Application number: 04251191.5
(22) Date of filing: 02.03.2004
(51) Int. Cl.: B01D 27/10, B01D 35/147

(54) **Filter with bypass pressure relief valve**

(30) Priority: 03.03.2003 US 379098
(71) Applicant: Arvin Technologies, Inc., Troy, MI 48084 (US)
(72) Inventor: Frye, Randy, Fayetvile North Carolina 28306 (US)
(74) Representative: Croston, David

(57) **Abstract**

A fluid filter assembly including a canister having a first passage and a second passage. A filter element is disposed within the canister and defines a bore, which is aligned with and in communication with the first passage. An end-cap is mounted on the end of the filter element and has a center portion, which is aligned with the bore of the filter element and has at least one bypass hole. A washer valve is mounted on the center portion of the end-cap, and has a closed position, wherein the washer valve sits flush against the end-cap sealing the at least one bypass hole from the bore, and an open position, wherein the washer valve deflects away from the end-cap exposing the at least one bypass hole to the bore.

## Description

### BACKGROUND OF THE INVENTION

### 1. Field of the Invention.

The present invention relates to fluid filters, particularly, oil filters. More specifically, the present invention pertains to mechanisms for relieving pressure in fluid filters.

### 2. Description of the Related Art.

Internal combustion engines are typically provided with a lubrication system for lubricating the moving parts of an engine with oil. Over time, the oil collects particulate impurities, which can cause damage to the moving parts of the engine. Such particulate impurities include metal from the wear of the engine, carbon from the combustion of fuel, and minerals from the dust in the intake air.

Oil filters are commonly included in lubrication systems for the purpose of filtering out such particles. These oil filters, generally, include a cylindrical canister, a center tube. and a filter element. The canister includes a cylindrical wall, a central fluid outlet and a plurality of fluid inlets. The filter element is mounted about the center tube and both the center tube and filter element are disposed within the canister. Oil circulates through the oil filter by first entering the canister from the engine via the fluid inlets. An anti-drainback valve is often included to keep the oil from exiting back through the fluid inlets. Oil then flows through the filter element and into the center tube through apertures in the center tube wall. The filtered oil then exits the filter through the central fluid outlet and flows to the engine.

When the filter element becomes clogged with particles or, as in the case of a cold start. when the oil is too cold and viscous, the oil cannot pass through the filter element. In this case, pressure builds in the canister outside the center tube and filter element. Consequently, oil filters are generally provided with a pressure relief valve by which the unfiltered oil bypasses the filter element and is re-circulated to the engine, thereby relieving the pressure in the canister. Several different pressure relief valve mechanisms are known in the art. Many of these mechanisms are relatively complex spring-operated valves having one or more springs and intricate moving parts. Such mechanisms can be difficult and expensive to assemble. In addition. such mechanisms often have a wide and/or inconsistent range of pressure relief.

Other proposed pressure relief valve mechanisms use resilient check valves to provide pressure relief. In these systems, the check valves include a resilient flange made of a resilient material such as rubber. The resilient check valves are located near the fluid inlets and cover an unfiltered passage from the fluid inlets to the central fluid outlet when pressure is normal. When pressure increases, the resilient check valve deflects away from the passage allowing oil to flow directly from the fluid inlets to the central fluid outlet. Such resilient check valves may include additional rubber parts that may be difficult to assemble and may provide inconsistent pressure relief ranges.

Accordingly, a need remains for a fluid filter assembly that is relatively easy to assemble, has an effective and relatively simple pressure relief mechanism, and provides relatively consistent pressure relief ranges.

### SUMMARY OF THE INVENTION

The present invention provides a fluid filter assembly comprising a canister having a first passage and a second passage; a filter element disposed within the canister and defining a bore, the bore aligned with and in communication with the first passage; an end-cap mounted on the filter element and having a center portion, the center portion aligned with the bore and having at least one bypass hole; and a washer valve mounted on the center portion of the end-cap.

In a related aspect, the washer valve has a closed position, wherein the washer valve sits flush against the center portion thereby sealing the at least one bypass hole from the bore; and an open position wherein the washer valve deflects away from the center portion exposing the at least one bypass hole to the bore such that the bore is in unfiltered communication with the second passage through the at least one bypass hole.

The present invention also provides a relief valve assembly for a fluid filter assembly having a canister including a first passage and a second passage; a filter element disposed within the canister and defining a bore aligned with and in communication with the first passage. The relief valve assembly comprises an end-cap engageable to the filter element and having at least one bypass hole, the at least one bypass hole alignable with the bore of the filter element. A washer valve is mounted on the end-cap and has a closed position and an open position.

In a related aspect, the washer valve sits flush against the end-cap sealing the at least one bypass hole from the bore when the washer valve is in the closed position. When the washer valve is in the open position, the washer valve deflects away from the end-cap such that the at least one bypass hole is exposable to the bore and the bore is communicable with the second passage through the at least one bypass hole.

In another aspect, the present invention provides a fluid filter assembly comprising a canister having a first passage and a second passage; a filter element disposed within the canister and defining a bore, the bore aligned with and in communication with the first passage; an end-cap mounted on the filter element and having at least one bypass hole aligned with the bore: and a washer valve mounted on the end-cap. The washer valve has a closed position, wherein the washer valve sits flush against the end-cap sealing the at least one bypass hole from the bore, and an open position, wherein the washer valve deflects away from the end-cap exposing the at least one bypass hole to the bore such that the second passage is in unfiltered communication with the bore through the at least one bypass hole.

In a related aspect, the end-cap includes a center portion aligned with the bore, the at least one bypass hole is positioned on the center portion. Further, the center portion of the end-cap is recessed, the recessed center portion snugly fits within the bore.

In a further aspect, the washer valve is comprised of a metal from the group consisting of steel, brass, spring steel, aluminum, or composite thereof. Alternatively, the washer valve is comprised of a plastic.

### BRIEF DESCRIPTION OF THE DRAWINGS

The above-mentioned and other features and objects of this invention, and the manner of attaining them, will become more apparent and the invention itself will be better understood by reference to the following description of embodiments of the invention taken in conjunction with the accompanying drawings, wherein:
FIG. I is a cross-section view of a fluid filter assembly according to one embodiment of the present invention;
FIG. 2 is a cross-section view of an embodiment of a washer valve assembly according to the present invention;
FIG. 3 is a perspective view of the exterior side of the washer valve assembly of FIG.2;
FIG. 4 is a perspective view of the interior side of the disassembled washer valve of FIG. 3;
FIG. 5 is a partial cross-section view of the fluid filter assembly of FIG. 1 taken along lines 5-5;
FIG. 6A is a cross-section view of the washer valve assembly of FIG. 2 with the washer valve in closed position;
FIG. 6B is a cross-section view of the washer valve assembly of FIG. 6A with the washer valve in open position;
FIG. 7A is a cross-section view of the fluid filter assembly of FIG. I with the washer valve in closed position;
FIG. 7B is a cross-section view of the fluid filter assembly of FIG. 7A with the washer valve in open position;
FIG. 8A is a cross-section view of another embodiment of a washer valve assembly according to the present inventor;
FIG. 8B is a cross-section view of the washer valve assembly of FIG. 8A with the washer valve in open position;
FIG. 9A is a cross-section view of still another embodiment of a washer valve assembly according to the present invention;
FIG. 9B is a cross-section view of the washer valve assembly of FIG. 9A with the washer valve in open position: and
FIG. 10 is a cross-section view of a fluid filter assembly according to another embodiment of the present invention.

### DETAILED DESCRIPTION

The embodiments hereinafter disclosed are not intended to be exhaustive or to limit the invention to the precise forms disclosed in the following description. Rather the embodiments are chosen and described so that others skilled in the art may utilize its teachings.

Referring first to FIG. I, fluid filter assembly 10, generally, includes canister 12 and filter element assembly 30. Canister 12 has closed end 14, open end 16, and cylindrical canister wall 26 defining hollow 28. At open end 16 is end-plate or bottom assembly 24, which includes central fluid outlet or first passage 18 and plural fluid inlets or second passage 20. First passage 18 is typically internally threaded for screwing oil filter assembly 10 onto a complementary hollow and threaded bolt (not shown) on the engine (not shown). Open end 16 also commonly includes seating gasket 22 for sealing fluid filter assembly 10 to engine (not shown).

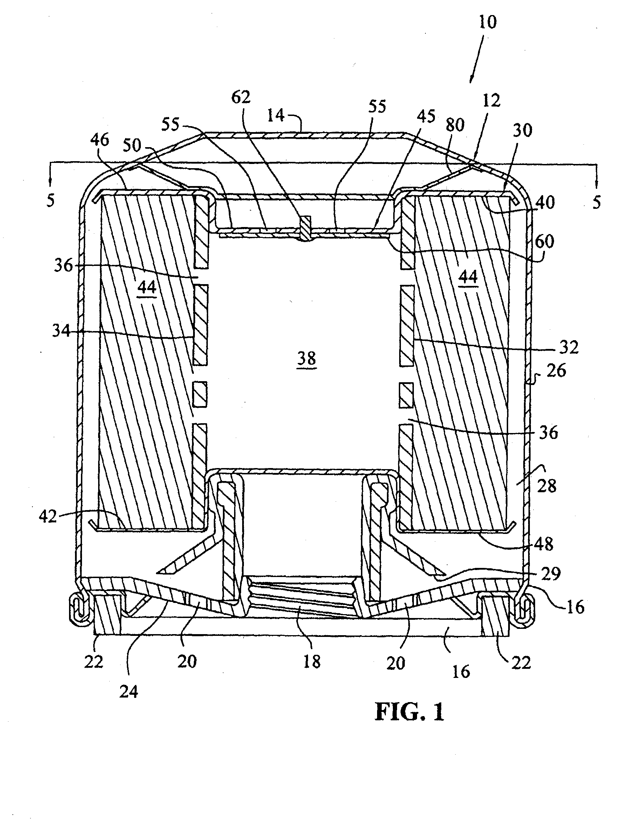

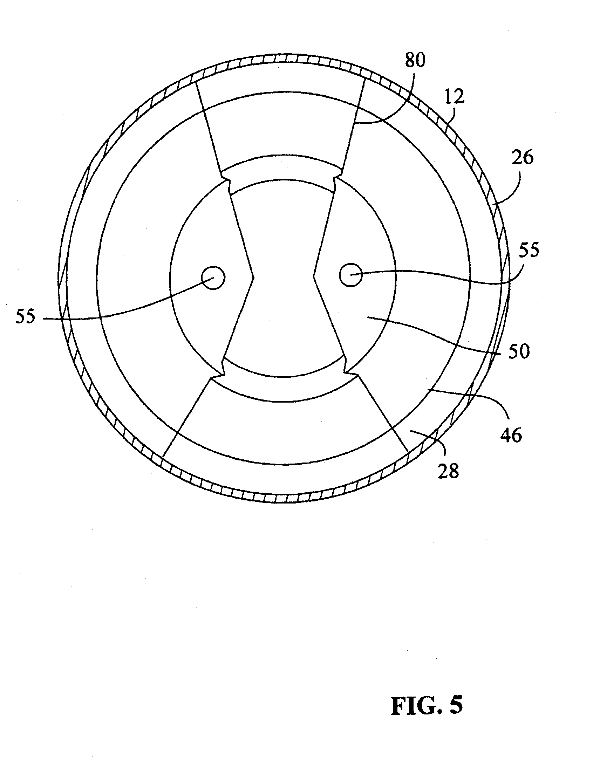

Filter element assembly 30 is disposed within hollow 28 of canister 12 and, generally, includes cylindrical center tube 32, a filter element 44 disposed about center tube 32 and a pair of end-caps 46, 48. Center tube 32 includes cylindrical center tube wall 34, which defines bore 38 and has plural apertures 36. Bore 38 is aligned with and is in fluid communication with first passage 18. Bore 38 is in filtered fluid communication with second passage 20 through filter element 44 and plural apertures 36. Filter element 44 also includes first and second ends 40, 42, which sealingly engage first and second end-caps 46,48, respectively, to prevent unfiltered fluid from entering bore 38. As illustrated in FIGS. 1 and 5, elongate element guide 80 is positioned between end-cap 46 and closed end 14 of canister 12, spacing filter element assembly 30 from closed end 14 of canister 12. Anti-drain back valve 29 is positioned near second passage 20.

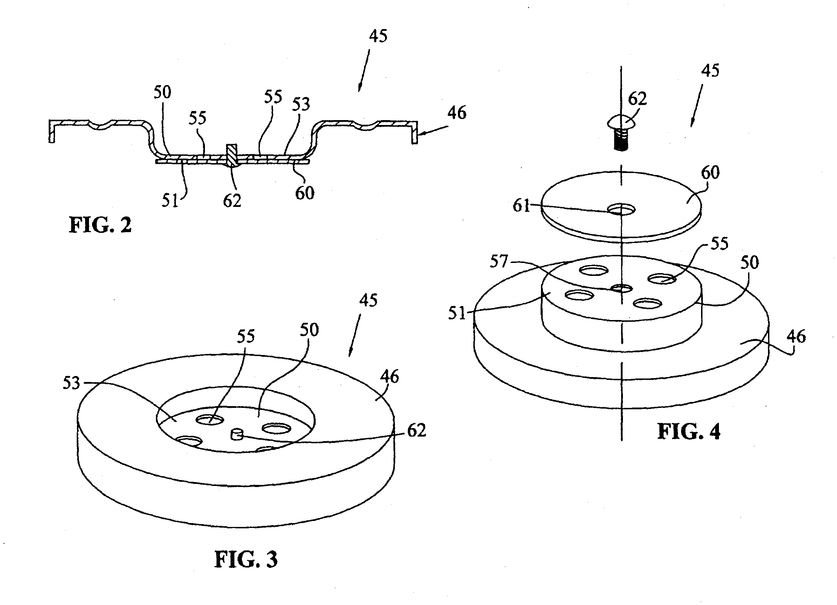

Referring now to FIGS. 1-4, filter assembly 10 also includes washer valve assembly 45, which comprises end-cap 46 and washer valve 60. End-cap 46 includes a plurality of bypass holes 55, which are aligned with bore 38. As previously mentioned, end-cap 46 is sealingly engaged to first end 40 of filter element 44 to prevent unfiltered fluid from entering bore 38. Such sealed engagement may be accomplished using any appropriate adhesive.

Alternatively or additionally, end-cap 46 may be sealingly engaged to center tube 32 by welding, brazing, adhering, or using mechanical arrangements. For instance, although not necessary, the center portion 50 of end-cap 46 may be recessed, as shown in FIG. 1. Recessed center portion 50 fits snugly into bore 38, thereby sealingly engaging end-cap 46 to center tube 32.

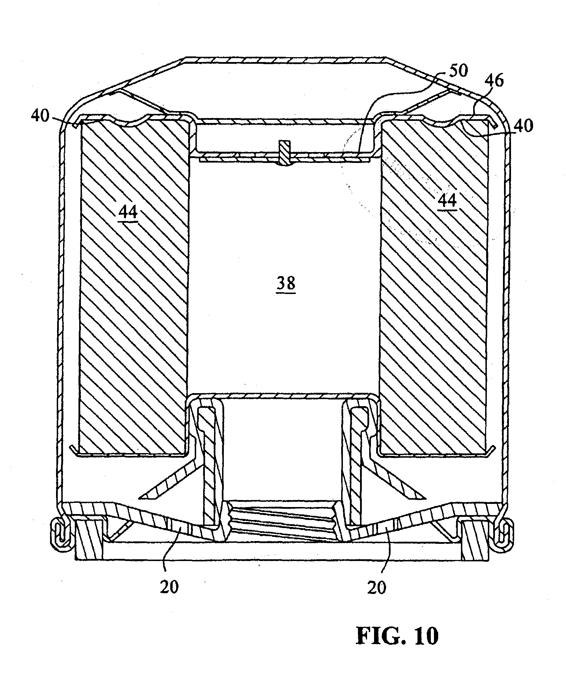

It should be understood that, although the embodiments shown in FIGS. 1, 5, 7A and 7B include center tube 32, center tube 32 is not necessary to the present invention. Alternatively, the filter assembly may be configured such as the assembly shown in FIG. 10. In this embodiment, the filter element 44 defines bore 38, which is in communication with second passage 20 directly through filter element 44. End cap 46 is sealingly engaged to first end 40 of filter element 44 and recessed center portion 50 fits into bore 38 at first end 40 of filter element 44.

Referring back to FIGS. 1-4, center portion 50 has interior side 51 and exterior side 53. Washer valve 60 has a diameter substantially equal to that of center portion 50 and is mounted on interior side 51 of center portion 50 by fastener 62. Fastener 62 can be any fastener such as a rivet. screw, bolt, pin or other known fastener. Alternatively, washer valve 60 may be fastened using any suitable means, such as spot-welding.

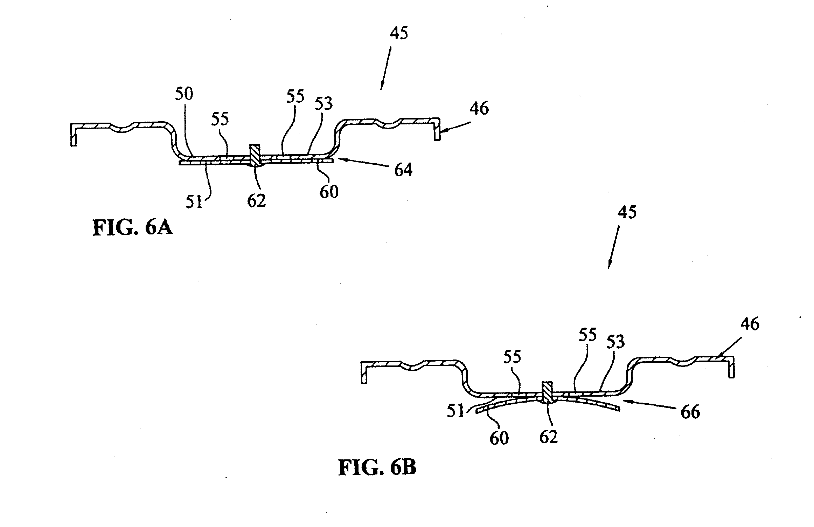

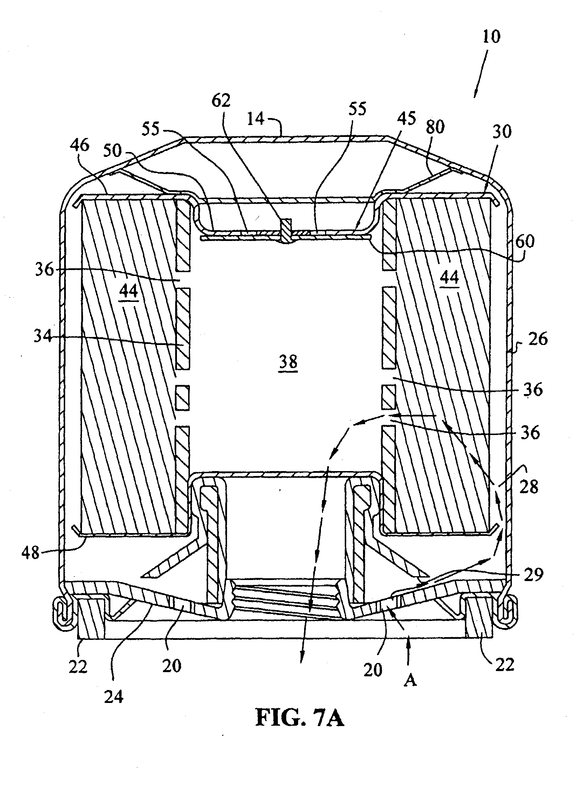

Referring now to FIG. 7A, at normal operating pressures and temperatures, oil circulates through filter assembly 10 via route A. More specifically, unfiltered (dirty) oil flows from the engine to canister 12 through second passage 20. The unfiltered oil then enters filter element 44 where the particulate impurities, such as metal, carbon, and dust, are removed from the oil and are absorbed by filter element 44. The filtered (clean) oil then flows into bore 38 through apertures 36 in center tube wall 34. From bore 38, the filtered oil flows through first passage 18 to the engine. As illustrated in FIGS. 6A and 7A, washer relief valve 60 naturally biases to flush or closed position 64, and therefore, during normal operating pressures and temperatures, washer relief valve 60 sits flushly against interior side 51 of end-cap 46. In this closed position 64, washer relief valve 60 seals off bypass holes 55 from bore 38, thereby preventing unfiltered oil from bypassing filter element 44 and flowing into bore 38 through bypass holes 55.

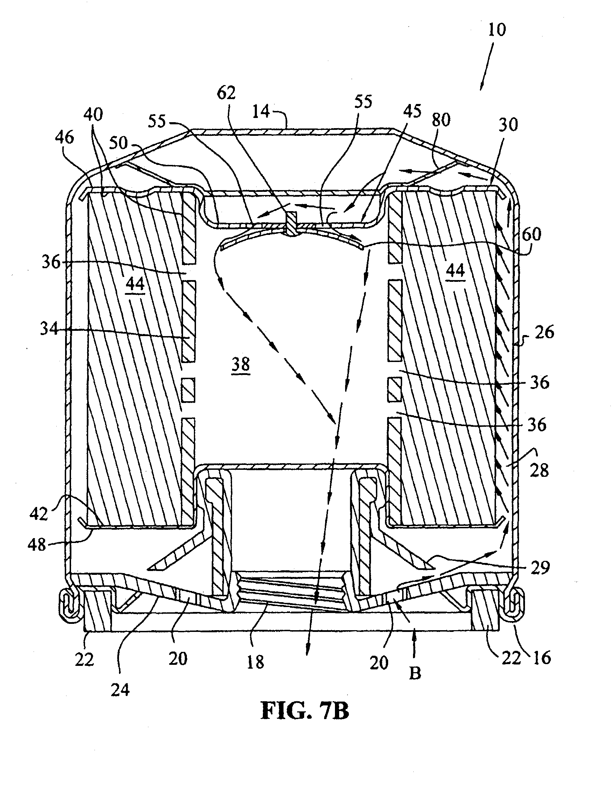

When filter element 44 is clogged, such as when filter element becomes inundated with particulate impurities, or when the oil is too viscous to pass through filter element 44, as is the case during a cold start, pressure builds in the canister 12 between filter element 44 and canister wall 26. When pressure reaches a certain predetermined limit, washer relief valve 60 is deflected inward into bore 38, thereby causing washer relief valve 60 to move to deflected or open position 66, shown in FIGS. 6B and 7B. In this open position 66, bypass holes 55 are open to bore 38 and oil circulates through oil filter assembly 10 via route B, shown in FIG. 7B. More specifically, unfiltered oil enters the canister 12 through second passage 20. The unfiltered oil then bypasses filter element 44 and flows into bore 38 through bypass holes 55. The unfiltered oil then flows through first passage 18 to the engine. When pressure decreases below the predetermined limit, such as when the oil warms and becomes less viscous, the natural bias of washer relief valve 60 causes washer relief valve 60 to move back to closed position 64, thereby closing bypass holes 55 and preventing unfiltered oil from entering bore 38.

Although the fluid filter assembly of the present invention has been exemplified as an oil filter, it is contemplated that the fluid filter assembly of the present invention can be used in other filtering applications, such as fuel filters or coolant filters. Furthermore, it is also contemplated that the fluid filter assembly of the present invention may be configured to accommodate a device in which the fluid flows in the opposite direction. In this case, unfiltered fluid would flow from the engine/device to the fluid filter assembly through the first passage, and then back to the engine/device from the fluid filter assembly through the second passage.

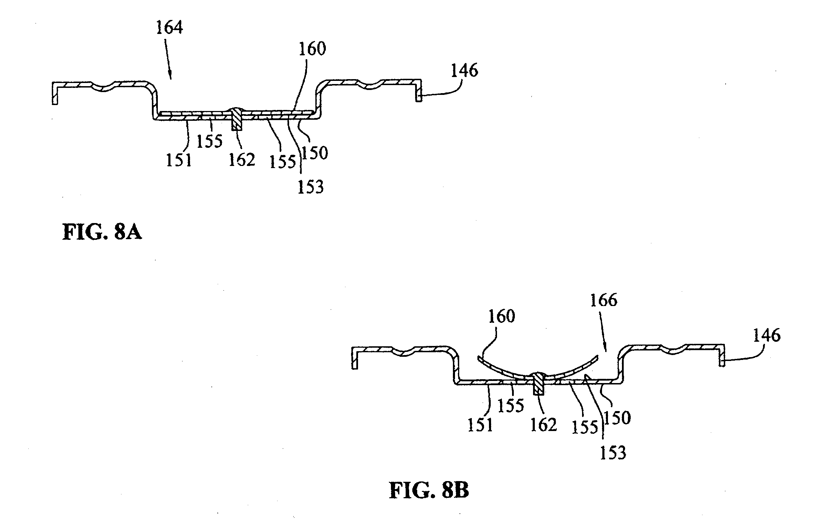

To accommodate this reverse flow, the filter element would be mounted on the inside of the center tube and. as shown in FIGS. 8A and 8B, washer valve 160 would be mounted on the exterior side 153 of center portion 150. At normal operating pressures and temperatures, fluid flows from the engine/device to the bore through the first passage. The unfiltered oil then enters the filter element where the particulate impurities are absorbed by the filter element. The filtered fluid then flows from the bore through apertures in the center tube to the second passage, and then to the engine/device. Referring to FIG. 8A, washer relief valve 160 naturally biases to closed position 164 and, therefore, during normal operating pressures and temperatures, washer relief valve 160 sits flushly against exterior side 153 of end-cap 146. In this closed position 164, bypass holes 155 are sealed from the bore by washer relief valve 160, thereby preventing unfiltered oil from bypassing the filter element and flowing out of the bore through bypass holes 155.

When the filter element is clogged, the pressure within the bore increases. When the pressure reaches a certain predetermined limit, washer relief valve 160 is deflected outward away from exterior side 153 of end-cap 146, thereby causing washer relief valve 160 to move to open position 166, shown in FIG. 8B. In this open position 166, bypass holes 155 are open to the bore and the unfiltered fluid circulates from the bore to the second passage and then to the engine/device. When the pressure decreases below the predetermined limit, the natural bias of the washer relief valve 160 causes the washer relief valve 160 to move to the closed position 164, thereby closing bypass holes 155 and preventing unfiltered oil from leaving the bore.

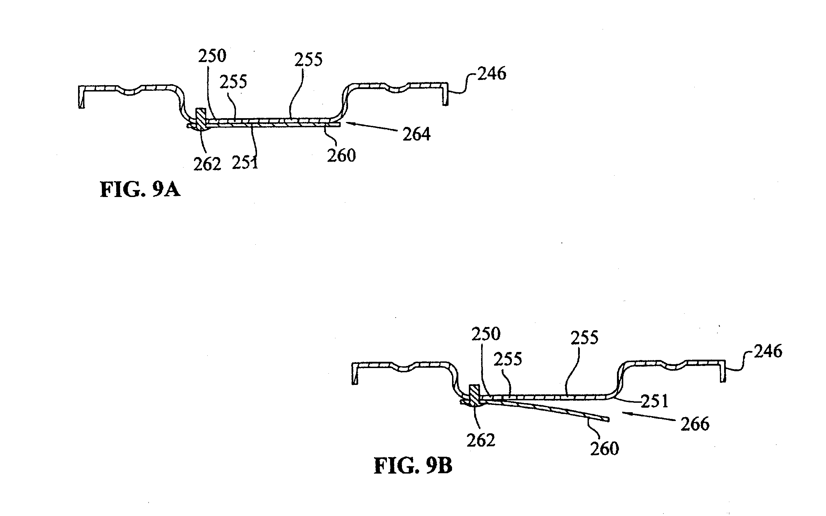

FIGS. I through 8B show washer valve 60 fastened at its center point to the center point of center portion 50. However, it should be understood that the present invention also contemplates fixing the washer relief valve to the end-cap at different points. For instance, in FIGS. 9A and 9B, washer relief valve 260 is affixed by fastener 262 to the outer perimeter region of center portion 250 of end-cap 246. In this configuration, washer relief valve 260 operates as a flap. More specifically, when washer valve 260 is in closed position 264, shown in FIG. 9A, washer valve 260 lies flush against interior surface 251 of center portion 250, thereby sealing bypass holes 255 from the bore. In the open position 266, shown in FIG. 9B, washer valve 260 is deflected away from interior surface 251 of center portion 250, thereby exposing bypass holes 255 to the bore. In this embodiment, washer relief valve 260 may be welded, bolted or otherwise affixed to center portion 250.

The washer valve of the present invention may be made of any material capable of being deflected at predetermined pressure limits, and capable of being manufactured with sufficient memory to return to its original undeflected position when pressure is reduced. Examples of such materials include, but are not limited to, steel, spring steel, brass, aluminum, plastics, and/or composites thereof. Due to the nature of the material and the design of the washer relief valve, the present invention offers a narrow and consistent range of pressure relief, However, the range of pressure relief may be customized by varying the type, diameter and/or thickness of the washer valve material. In addition, because the washer relief valve mechanism is relatively simple and requires few parts, the oil filter assembly is relatively easy and inexpensive to assemble.

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. A fluid filter assembly 10 comprising:
a canister 12 having a first passage 18 and a second passage 20;
a filter element 30 disposed within said canister and defining a bore 38, said bore aligned with and in communication with said first passage 18;
an end-cap 46 mounted on said filter element and having a center portion 50, said center portion aligned with said bore and having at least one bypass hole 55; and
a washer valve 60 mounted on said center portion of said end-cap.

2. The fluid filter assembly of claim 1 wherein said washer valve 60 has a closed position, wherein said washer valve sits flush against said center portion 50 sealing said at least one bypass hole 55 from said bore, and an open position wherein said washer valve 60 deflects away from said center portion 50 exposing said at least one bypass hole 55 to said bore 38 such that said bore is in unfiltered communication with said second passage 20 through said at least one bypass hole 55.

3. A fluid filter assembly comprising:
a canister having a first passage and a second passage;
a filter element disposed within said canister and defining a bore, said bore aligned with and in communication with said first passage;
an end-cap mounted on said filter element and having at least one bypass hole, said at least one bypass hole aligned with said bore; and
a washer valve mounted on said end-cap, said washer valve having a closed position, wherein said washer valve sits flush against said end-cap sealing said at least one bypass hole from said bore, and an open position wherein said washer valve deflects away from said end-cap exposing said at least one bypass hole to said bore such that said second passage is in unfiltered communication with said bore through said at least one bypass hole.

4. The fluid filter assembly of claim 3 wherein said end-cap includes a center portion aligned with said bore, said at least one bypass hole being positioned on said center portion.

5. The fluid filter assembly of any one of claims 1, 2 or 4 wherein said center portion 50 of said end-cap 46 is recessed, said recessed center portion 50 fitting within said bore of said filter element 30.

6. The fluid filter assembly of any one of claims 1, 2, 4 or 5 wherein said center portion 50 has a first diameter and said washer valve 60 has a second diameter, said second diameter being substantially equal to said first diameter.

7. The fluid filter assembly of any one of claims 1 to 6 wherein said washer valve 60 is comprised of a deflectable material.

8. The fluid filter assembly 10 of claim 7 wherein said deflectable material is a metal from the group consisting of steel, spring steel, brass, aluminium, and composites thereof.

9. The fluid filter assembly 10 of claim 7 wherein said deflectable material is plastic.

10. The fluid filter assembly 10 of any preceding claim further comprising a center tube 32 disposed within said bore 38 and concentric with said filter element 30, said center tube including a center tube wall 34 having a plurality of apertures 36, said bore in filtered communication with said second passage 20 through said plurality of apertures 36.

11. A relief valve assembly 45 for a fluid filter assembly 10 having a canister 12 including a first passage 18 and a second passage 20; a filter element 30 disposed within the canister 12 and defining a bore 38 aligned with and in communication with the first passage 18, comprising:
an end-cap 46 engageable to the filter element 30 and having at least one bypass hole 55, said at least one bypass hole 55 alignable with the bore 38 of the filter element 30; and
a washer valve 60 mounted on said end-cap 46 and having a closed position and an open position.

12. The relief valve assembly 45 of claim 11 wherein said washer valve 60 sits flush against said end-cap 46 sealing said at least one bypass hole 55 from the bore 38 when said washer valve 60 is in said closed position.

13. The relief valve assembly 45 of claim 11 or 12 wherein, when said washer valve 60 is in said open position, said washer valve deflects away from said end-cap 46 such that said at least one bypass hole 55 is exposable to the bore 38 and the bore is communicable with the second passage 20 through said at least one bypass hole 55.

14. The relief valve assembly 45 of any one of claims 11 to 13 wherein said end-cap 46 includes a center portion 50 and said at least one bypass hole 55 is positioned on said center portion.

15. The relief valve assembly 45 of claim 14 wherein said center portion is recessed, said recessed center portion insertable into the bore 38.
